# EUROPEAN PATENT APPLICATION

(11) **EP 2 386 461 A2**
(43) Date of publication of application: **16.11.2011**
(21) Application number: 10380119.7
(22) Date of filing: 21.09.2010
(51) Int. Cl.: B62B 7/08

(54) **Lockable articulation**

(30) Priority: 13.05.2010 ES 201030466 U
(71) Applicant: Jané S.A., 08184 Palau de Plegamans (Barcelona) (ES)
(72) Inventor: Jane Santamaria, Manuel, 08184 Palau Solita I Plegamans Barcelona (ES)
(74) Representative: Morgades y Manonelles, Juan Antonio

(57) **Abstract**

This invention consists of a lockable articulation (1) of simplified design and offering easy access to the means of locking. This articulation has only two components: A fixed support (2) and a rotating drum (3) fitted to the support on a transversal axis (4), both components having the corresponding means to lock the drum at least in two positions in its circle of rotation. The means for locking consist of a fork (5) fitted longitudinally sliding on the sides of the support and presenting a crossbar that can fit selectively into one of the transversal grooves in the drum. The means for locking and unlocking are fitted to the support itself and comprise a spring (8) that presses on the fork ensuring the coupling of the crossbar in the chosen groove of the drum.

## Description

### TECHNICAL FIELD OF THE INVENTION

This articulation is applicable mainly to children's pushchairs comprising a frame and a seat, the frame being basically formed by a handlebar and supports with front wheels and rear wheels.

### BACKGROUND OF THE INVENTION

Children's pushchairs of this type, in which the articulations generally comprise several superimposed rotating discs to which the handlebar, the front and rear wheels supporting legs and the support for attaching the seat are joined are known. They have a complex design that makes the manufacturing and folding of the pushchair more difficult.

### SUMMARY OF THE INVENTION

This invention consists of a lockable articulation of simplified design and offering easy access to the means of locking.

This articulation has only two components: A fixed support and a rotating drum fitted to the support on a transversal axis, both components having the corresponding means to lock the drum at least in two positions in its circle of rotation.

The means for locking consist of a fork fitted longitudinally sliding on the sides of the support and presenting a crossbar that can fit selectively into one of the transversal grooves in the drum.

The means for locking and unlocking are fitted to the support itself and comprise a spring that presses on the fork ensuring the coupling of the crossbar in the chosen groove of the drum.

These and other characterizing features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In the drawings:
Figure 1 shows a perspective of the articulation fitted to the frame of a children's pushchairs,
Figures 2 and 3 represent, respectively, a side elevation and a sectional elevation of said articulation, and
Figure 4 illustrates a side sectional detail of the locking means.

### DETAILED DESCRIPTION

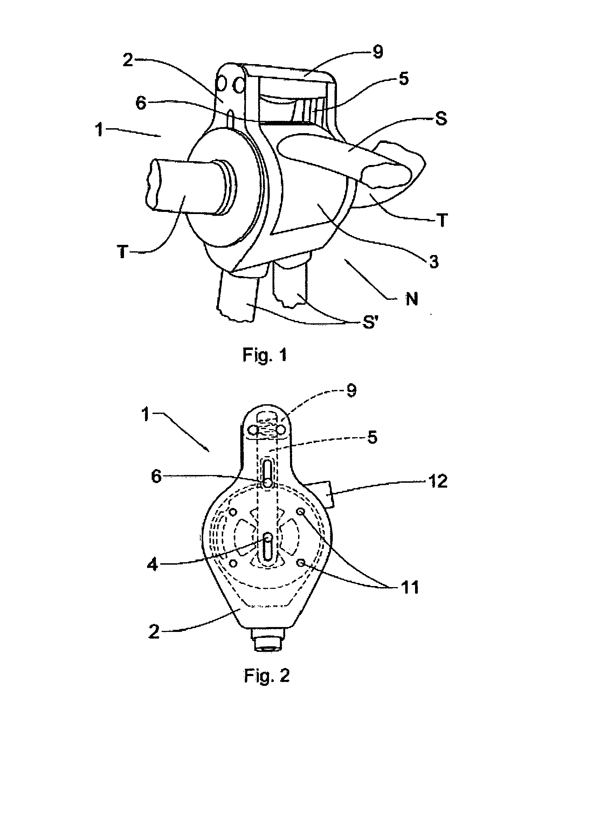

According to the drawings, as per Fig. 1, the articulation (1) object of the invention is applicable to a child's pushchair comprising a frame with crossbar (T) with a central core to which the supports (S) of the front wheels and (S') of the rear wheels are joined.

The articulation (1) is in this core (N) and is basically composed of two components: A fixed support (2), U-shaped and a rotating drum (3) located in said support on a transversal axis (4), both components (2 and 3) have the corresponding means to lock the drum in two positions in its rotation.

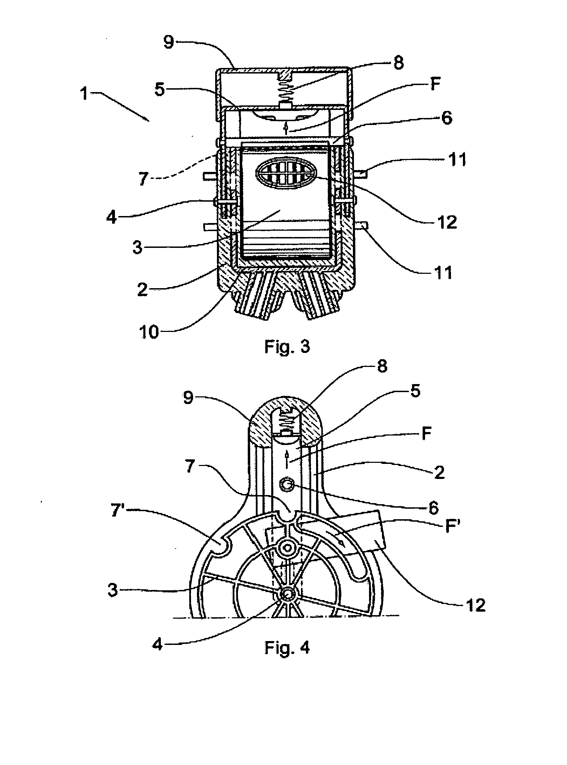

The device for locking consists of a rectangular inverted U-shaped fork (5) fitted longitudinally, sliding on the sides of the support (2), which has a crossbar (6) that can fit into either of the two transversal grooves (7 and 7') existing in the periphery of the drum. (3) (Fig. 4).

The Fork (5) is pressed by a spring (8) ensuring the crossbar (6) stays inserted in the chosen groove (7 or 7'). This spring is located between the transversal section of the fork and a transversal cover (9) secured on the upper part to the extensions on the sides of the support (2).

The support (2), made of plastic, has a U-section metal frame (10) inlaid inside it to the sides of which sides there are rods (11) that project from the sides of the support (2) and by means of which the two sections of the crossbar (T) are secured to it.

Reference (12) indicates the lock, joined to the drum (3) where the support of the front wheels (5) will be secured.

Unlocking the drum position (3), according to Fig. 3, will be done manually, pressing the fork (5) in the direction of the arrow (F), so that the crossbeam (6) will detach from the groove (7) (Fig. 4). Then, the drum is free (3) and turning it in the direction of the arrow (F') groove (7') will coincide with the crossbar (6), which by means of the spring (8) will remain located in it.

This rotation of the drum will determine the folding of the support (S) for the front wheels when you wish to fold the child's pushchair.

The invention can within its essentiality be put into practice in other embodiments differing only in detail from the one having been described above only by way of example, said other embodiments also falling within the scope of the protection being claimed. This lockable articulation may thus be manufactured in any shape and size, with the most suitable means and materials and with the most convenient accessories, and the components may be replaced by others that are technically equivalent, as all of this is contained within the spirit of the claims.

## Claims

1. Lockable articulation applicable mainly to children's pushchairs, **characterised in that** it is basically composed of two components: A fixed support and a rotating drum fitted to the support on a transversal axis, both components having the corresponding means to lock the drum at least in two positions in its circle of rotation.

2. Lockable articulation, according to claim 1, **characterised in that** the means for locking consist of a fork fitted longitudinally sliding on the sides of the support and presenting a crossbar that can fit selectively into one of the transversal grooves in the drum.

3. Lockable articulation, according to claim 2, **characterised in that** the fork is pressed by a spring ensuring the crossbar of the fork stays inserted in the chosen groove of the drum.
